# EUROPÄISCHE PATENTSCHRIFT

(11) **EP 2 112 008 B1**
(45) Veröffentlichungstag und Bekanntmachung des Hinweises auf die Patenterteilung: **18.08.2010**
(21) Anmeldenummer: 09158515.8
(22) Anmeldetag: 22.04.2009
(51) Int. Cl.: B60D 1/64, B62D 53/12

(54) **Steckerkonsole für ein Anhängerfahrzeug eines Lastzuges**
Plug console for a trailer vehicle of a truck
Console de prise pour une remorque d'un camion à remorque

(30) Priorität: 23.04.2008 DE 102008001349
(43) Veröffentlichungstag der Anmeldung: 28.10.2009
(73) Patentinhaber: Jost-Werke GmbH, 63263 Neu-Isenburg (DE)
(72) Erfinder: Algüera, José, 63739, Aschaffenburg (DE); Eiermann, Michael, 64319, Pfungstadt (DE)
(74) Vertreter: Fuchs

(56) Entgegenhaltungen:
- EP-A- 0 285 477
- EP-A- 1 624 116
- EP-A- 1 900 620
- WO-A-2005/028220
- DE-A1-102004 024 333
- DE-A1-102006 033 899

## Beschreibung

Die Erfindung betrifft eine Steckerkonsole für ein Anhängerfahrzeug eines Lastzuges, umfassend einen an einem Lager um ein Kupplungsmittel des Anhängers schwenkbaren Tragrahmen und einen an dem Tragrahmen ortsfest angeordneten Stecker sowie ein Verfahren zum Verbinden eines an einem Anhänger befindlichen Steckers mit einer an einem Zugfahrzeug befindlichen Steckerdose.

Derartige Steckerkonsolen kommen beispielsweise an Sattelzügen zum Einsatz, um nach einem mechanischen Ankuppeln des Aufliegers auch die Versorgungsleitungen des Zugfahrzeugs mit dem Auflieger weitgehend automatisiert zu verbinden, so dass der Fahrer nicht mehr zwischen das Zugfahrzeug und den Auflieger klettern und dort die Versorgungsleitungen insbesondere für die Druckluft- und Stromversorgung von Hand stecken muss.

Einen gattungsgemäßen Stand der Technik bildet die DE 2004 024 333 A1 mit einem Steckkupplungssystem, bei dem eine aufliegerseitige Steckvorrichtung mit einem ortsfest darin angeordneten Stecker in eine unterhalb der Einfahröffnung befindliche Steckerbuchse eingefahren wird. Hierfür ist der aufliegerseitige Stecker in einem Niveau unterhalb des Königszapfens angebracht und stößt beim mechanischen Kuppeln von Zugfahrzeug und Auflieger in eine auf gleichem Niveau unterhalb der Einfahröffnung angeordnete Steckerdose.

Um Verschmutzungen und vorzeitigen Verschleiß vorzubeugen, wird in der DE 10 2006 033 899 A1 vorgeschlagen, den aufliegerseitigen Stecker auf einem vertikal gegenüber dem Tragrahmen verfahrbaren Verschlussblech anzuordnen, welches den Stecker unmittelbar vor dem Steckvorgang aus dem schützenden Tragrahmen nach unten herausbewegt und dadurch ein Kuppeln mit der zugfahrzeugseitigen Steckerdose ermöglicht.

Bei beiden bekannten Systemen liegt der Stecker grundsätzlich beziehungsweise kurz vor dem Verbinden der Versorgungsleitungen in einem Niveau unterhalb des Königszapfens beziehungsweise unterhalb der Einfahröffnung der Sattelkupplung, um ein Ein- und Ausfahren des Königszapfens in die Sattelkupplung zu gewährleisten. Als nachteilig hat sich herausgestellt, dass es bei einer besonders niedrigen Bauhöhe der Sattelkupplung oder einer stark angehobenen Zugmaschinen-Hinterachse zu einer Kollision des tief liegenden Steckers mit Komponenten der Zugmaschine kommen kann.

Demzufolge lag der Erfindung die Aufgabe zugrunde, eine anhängerseitige Steckerkonsole bereitzustellen, welche die Gefahr von Beschädigungen des Steckers durch Komponenten der Zugmaschine vermindert.

Die Aufgabe wird mit einer Steckerkonsole gelöst, bei welcher der Stecker in der Fahrzeuglängsachse zumindest teilweise von dem Kupplungsmittel überdeckt und vor dem Stecker eine zumindest während des Kupplungsvorgangs auf den Stecker geneigt zulaufende Führungsrampe ausgebildet ist. Unter einer Überdeckung des Steckers durch das Kupplungsmittel wird ein in der Fahrzeuglängsachse projizierter Raum mit den Konturen des Kupplungsmittels, beispielsweise eines Königszapfens, verstanden, welcher ganz oder teilweise die Querschnittsfläche des Steckers berührt. Eine Kontaktierung des Steckers mit einer zugfahrzeugseitigen Steckerdose ist bei einer geradlinigen, im Wesentlichen horizontalen Annäherung der zu verbindenden Fahrzeuge mittels der Führungsrampe möglich. Die Führungsrampe tritt während des Kupplungsvorgangs zunächst mit der zugfahrzeugseitigen Steckerdose in Kontakt und hebt den Stecker bei weiterer Annäherung der Fahrzeuge auf das Niveau des Steckers.

Vorteilhafterweise ist der Stecker gegenüber der Fahrzeuglängsachse nach unten geneigt. Bei einem nach unten geneigten Stecker sollte die Führungsrampe ebenfalls nach unten geneigt sein, um eine Zuführung einer zugfahrzeugseitigen Steckerdose sicherzustellen. Je geringer der Abstand zu dem Kupplungsmittel gewählt ist, desto steiler kann die Führungsrampe geneigt sein. Die maximale Neigung der Führungsrampe sollte derart gewählt sein, dass bei Annäherung einer Steckerbuchse stets eine resultierende Kraft in Richtung des Steckers wirkt.

Zweckmäßigerweise ist zum Zeitpunkt des Ankuppelns die Führungsrampe steiler als die Steckachse des Steckers geneigt. Hierdurch kann die Steckerkonsole eine möglichst kurze Bauraumtiefe aufweisen.

Es hat sich als günstig herausgestellt, wenn der Stecker mit seiner Unterseite oberhalb oder auf dem Niveau der Unterseite des Königszapfens angeordnet ist. Dadurch befindet sich der Stecker während des Ankuppelns im Schutz des Königszapfens und ist in geringerem Maße einem Beschädigungsrisiko ausgesetzt.

Gemäß einer bevorzugten Ausführungsform greift an dem Tragrahmen ein in der Fahrzeuglängsachse gegenüber diesem verschiebbar gelagerter Kulissertschieber an. Der Kulissenschieber ist schubladenartig innerhalb des Tragrahmens geführt. Ohne das Vorhandensein einer Sattelkupplung befindet sich der Kulissenschieber in einer federvorgespannten Position mit minimalem Abstand zu dem Kupplungselement.

Vorteilhafterweise weist der Kulissenschieber zwei komplementär zur Einfahröffnung einer Sattelkupplung ausgerichtete Wandabschnitte auf. Diese schräg stehenden Wandabschnitte liegen vollflächig an den seitlichen Wandungen der Sattelkupplung im Bereich der Kupplungshörner an und stoßen bei einer weiteren Annäherung des Zugfahrzeugs an den Anhänger den Kulissenschieber relativ zu dem Tragrahmen nach hinten. Somit nimmt die Distanz zwischen dem Kulissenschieber und dem Kupplungsmittel zu.

In dem Kulissenschieber ist zweckmäßigerweise eine erste Kulisse ausgeformt, welche mit der Führungsrampe zusammenwirkt. Anstelle einer Kulisse kann auch ein Hebel vorgesehen sein, der als Verbindungselement zwischen Führungsrampe und Kulissenschieber angeordnet ist und von dem Kulissenschieber betätigt wird.

Die Kulisse ist vorzugsweise derart ausgeformt, dass die Führungsrampe unmittelbar vor dem Auftreffen der Steckerdose eine maximale Neigung aufweist. Während des Vorschiebens der bereits auf der Führungsrampe aufliegenden zugfahrzeugseitigen Steckerdose kann der Verlauf der Kulisse ein Anheben der Steckerdose auslösen. Hieraus resultiert der Vorteil, dass die Steckerdose besonders leicht in den Stecker gleitet.

Günstigerweise ist in dem Kulissenschieber eine zweite Kulisse oder ein weiterer Hebel ausgeformt, welche mit einer Steckerblende zusammenwirkt. Der weitere Hebel wäre dann als Verbindungselement zwischen der Steckerblende und dem Kulissenschieber angeordnet. Die Steckerblende vermindert insbesondere den Eintrag von Schmutz und Feuchtigkeit, so dass der Stecker deutlich weniger verschleißt und korrodiert. Durch das Verfahren des Kulissenschiebers während des Kupplungsvorganges wird der Stecker von der Steckerblende freigegeben.

Die Erfindung ist auch an einem Steckkupplungssystem verwirklicht, bei dem ergänzend zu der erfindungsgemäßen Steckerkonsole unterhalb der Einfahröffnung einer Sattelkupplung eine vertikal schwenkbare Steckerdose angebracht ist. Dabei sollte der Stecker in kontaktiertem Zustand mit der Steckerdose in der Fahrzeuglängsachse beabstandet zu den Kupplungshörnern der Sattelkupplung angeordnet sein.

Dieses erfolgt zweckmäßigerweise durch eine endseitige Anbringung der Steckerdose an einem Tragarm. Vorteilhafterweise weist der Tragarm an dem der Steckerdose gegenüberliegenden Ende ein Schwenklager auf, welches zum Beispiel an dem Unterbau einer Sattelkupplung ortsfest angeordnet ist.

Die Achse, um welche die Steckerdose schwenkt, liegt vorzugsweise unterhalb des Kupplungsmittels. Hieraus resultiert der Vorteil, dass der Stecker oder der gegebenenfalls vorhandene Tragarm nicht mit der Unterseite des Kupplungsmittels beziehungsweise Königszapfens kollidiert.

Vorzugsweise ragt die Steckerdose stets über das hintere Ende der Sattelkupplung hinaus. Hierdurch sind die Bauteile der Steckerkonsole mit großer Distanz zu der Kupplung des Zugfahrzeugs beabstandet, so dass das Risiko einer Kollision mit Bauteilen des Zugfahrzeugs, insbesondere der darauf montierten Sattelkupplung oder Teilen des Fahrzeugrahmens, weiter verringert ist.

Die Aufgabe wird auch durch ein Verfahren zum Verbinden eines an einem Anhänger befindlichen Steckers mit einer an einem Zugfahrzeug befindlichen Steckerdose gelöst, wobei die Steckerdose durch die Relativbewegung der Fahrzeuge aus einer Ruhelage auf eine vor dem Stecker angeordnete Führungsrampe gedrückt, auf der Führungsrampe angehoben und in einer Endstellung mit dem ortsfest in einem Tragrahmen angeordneten Stecker in Wirkeingriff gebracht wird.

Gemäß eines besonders günstigen Verfahrensschrittes wird durch ein Gleiten oder Abrollen des Steckers entsprechend dem Verlauf der Führungsrampe die laterale Bewegung der Fahrzeuge während des Kupplungsvorganges in eine Aufwärtsbewegung des Steckers gewandelt.

Vorzugsweise wird mittels des formschlüssig in die Sattelkupplung einfahrbaren Tragrahmens eine laterale Bewegung eines verschiebbar daran angreifenden Kulissenschiebers in eine Schwenkbewegung der Führungsrampe gewandelt.

Zum besseren Verständnis wird die Erfindung nachfolgend anhand von insgesamt sechs Figuren näher erläutert. Es zeigen die:
- **Fig. 1:**: eine Seitenansicht auf eine Steckerkonsole;
- **Fig. 2:**: eine Seitenansicht auf eine Sattelkupplung mit daran angeordneter Steckerdose;
- **Fig. 3:**: eine perspektivische Unteransicht auf ein an einer Sattelkupplung und einem Königszapfen angebrachtes Steckkupplungssystem;
- **Fig. 4:**: eine Seitenansicht auf das Steckkupplungssystem an einem Sattelzug bei abgekuppeltem Auflieger;
- **Fig. 5:**: eine Seitenansicht gemäß Fig. 4 während des Kupplungsvorgangs und
- **Fig. 6:**: eine Seitenansicht gemäß Fig. 4 oder 5 in angekuppeltem Zustand.

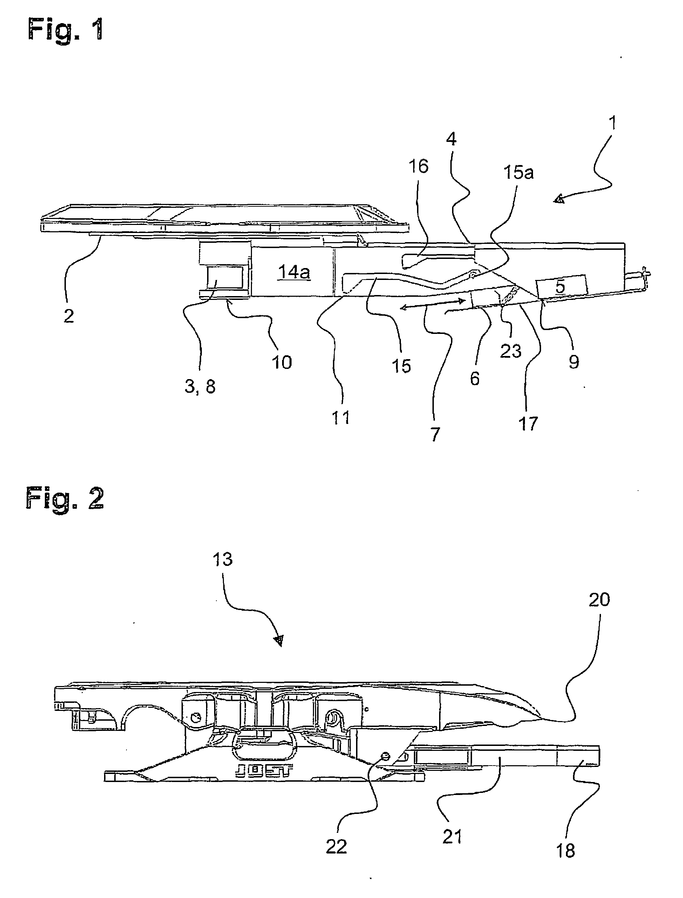

Die Figur 1 zeigt in einer Seitenansicht eine Steckerkonsole 1, die mittels eines Lagers 2 auf der Unterseite eines nicht näher gezeigten Aufliegers montiert ist und dabei um ein Kupplungsmittel 3 in Form eines Königszapfens 8 schwingen kann. Von dem Lager 2 verläuft in radialer Richtung zum Kupplungsmittel 3 ein Tragrahmen 4.

Der Tragrahmen 4 hält in einer dazu ortfesten Position einen Stecker 5, welcher beim Ankuppeln des Aufliegers an ein Zugfahrzeug mit einer daran befindlichen Steckerdose 18 (siehe Figur 2) in Verbindung gebracht wird. In vertikaler Richtung entspricht das Niveau der Unterseite 9 des Steckers 5 dem Niveau der Unterseite 10 des Königszapfens 8. Das Niveauverhältnis von Kupplungsmittel 3 und Stecker 5 bleibt aufgrund der ortsfesten Anbringung des Steckers 5 an dem Tragrahmen 4 unabhängig vom Kupplungszustand der Fahrzeuge stets konstant.

Über den Stecker 5 und die Steckerdose 18 kann sowohl eine elektrische als auch pneumatische oder hydraulische Anbindung eines Anhängers realisiert werden.

An dem Tragrahmen 4 ist außerdem in der Steckachse 7 vor dem Stecker 5, das heißt zwischen Stecker 5 und Kupplungsmittel 8, eine Führungsrampe 6 angeordnet. Die Führungsrampe 6 ist um eine horizontale Achse mittels eines Scharniergelenkes 23 gegenüber dem Tragrahmen 4 schwenkbar angebracht.

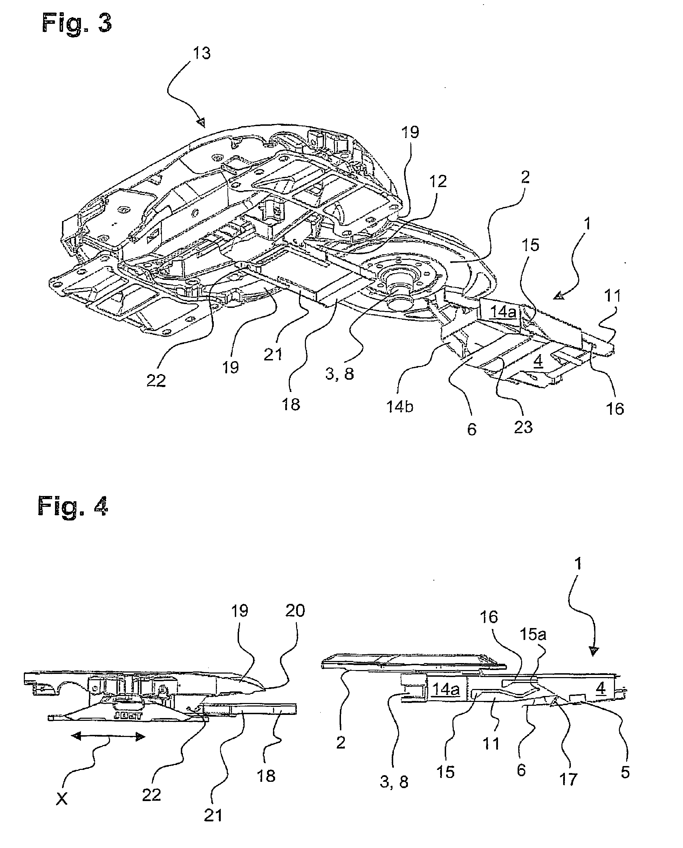

Der Tragrahmen 4 dient darüber hinaus als Widerlager für einen Kulissenschieber 11, der sich in der unbelasteten Ausgangsstellung ohne das Vorhandensein einer Sattelkupplung 13 (siehe Figuren 2 und 3) über nicht weiter gezeigte Federelemente in einer vorderen Position mit geringem Abstand zum Kupplungsmittel 3 befindet. Bei einem Auftreffen der Wandabschnitte 14a, 14b, von denen in der Darstellung der Figur 1 lediglich der vordere Wandabschnitt 14a sichtbar ist, auf die seitlichen Wandabschnitte der Einfahröffnung 12 der Sattelkupplung 13 wird der Kulissenschieber 11 von dem Kupplungsmittel 3 gegen die Spannung des nicht gezeigten Federelementes weggedrückt und gleitet dabei durch den Tragrahmen 4 nach hinten.

Der Kulissenschieber 11 weist eine erste Kulisse 15 auf, mit einem sich bezüglich des Kupplungsmittels 3 zunächst horizontal entfernenden Abschnitt und einem sich daran anschließenden V-förmigen Abschnitt. In die Kulisse 15 greift ein Steuernocken 15a ein, welcher ortsfest mit der Führungsrampe 6 verbunden ist. Während des Ankuppelns des Anhängers entfernt sich der Kulissenschieber 11 in einer lateralen Bewegung von dem Kupplungsmittel 3, so dass die in lateraler Richtung über den Tragrahmen 4 fixierte Führungsrampe 6 nebst Steuernocken 15a dem Verlauf der ersten Kulisse 15 folgt.

In dem Kulissenschieber 11 ist eine zweite Kulisse 16 ausgebildet, die mit einer vor dem Stecker 5 angeordneten Steckerblende 17 zusammenwirkt.

Die Figur 2 stellt ebenfalls in einer Seitenansicht die an der Sattelkupplung 13 befestigte Steckerdose 18 dar. Die Steckerdose 18 ist endseitig an einem Tragarm 21 ausgeformt. An dem der Steckerdose 18 gegenüberliegenden Ende des Tragarmes 21 ist dieser mittels eines Schwenklagers 22 an der Sattelkupplung 13 befestigt. Das Schwenklager 22 weist eine horizontal verlaufende Schwenkachse auf, die parallel zu der Schwenkachse des Scharniergelenkes 23 ausgerichtet ist.

Ohne das Vorhandensein der aufliegerseitigen Steckerkonsole 1 ist der Tragarm 21 im Wesentlichen parallel zu der Oberseite der Sattelkupplung 13, das heißt horizontal nach hinten, ausgerichtet. Dabei ist die Länge des Tragarmes 21 derart bemessen, dass die Steckerdose 18 über das hintere Ende 20 der Sattelkupplung 13 ragt und somit ausreichend weit von unter Umständen kollidierenden Bauteilen des Zugfahrzeugs entfernt ist.

Die Figur 3 verdeutlicht in einer perspektivischen Unteransicht die räumliche Lage einer an den Königszapfen 8 nebst Steckerkonsole 1 angenäherten Sattelkupplung 13 mit einer daran befindlichen Steckerdose 18. Zum Ankuppeln wird das Zugfahrzeug mit der Sattelkupplung 13 in Richtung des Königszapfens 8 verfahren bis dieser geführt durch die Kupplungshörner 19 in der Einfahröffnung 12 in einer zentrischen Position seine Endlage erreicht und in dieser formschlüssig mit der Sattelkupplung 13 verbunden wird. Die Einbauposition der Steckerdose 18 ist soweit unterhalb der Einfahröffnung 12 angeordnet, dass ein Überfahren durch den Königszapfen 8 möglich ist.

In der Darstellung der Figur 3 ist besonders gut die Schrägstellung der Wandabschnitte 14a, 14b zu erkennen, die komplementär zu der keilförmigen Einfahröffnung 12 der Sattelkupplung 13 ausgebildet ist. Die Figuren 4 bis 6 zeigen nacheinander unterschiedliche Kupplungszustände und die daraus resultierende Funktionsweise der Steckerkonsole 1 beziehungsweise des eine Steckerkonsole 1 und eine Steckerdose 18 umfassenden Steckkupplungssystems.

Eine zur Sattelkupplung 13 beabstandete Steckerkonsole 1 ist in Figur 4 dargestellt. In diesem Zustand befindet sich der Kulissenschieber 11 bezüglich des Tragrahmens 4 in einer angenäherten Position zu dem Königszapfen 8; der Steuernocken 15a der Führungsrampe 6 steht am bezüglich des Königszapfens 8 entfernt liegenden Ende der ersten Kulisse 15 innerhalb des V-förmigen Abschnitts. Ohne Kontakt der Wandabschnitte 14a, 14b mit der Sattelkupplung 13 ist die Führungsrampe 6 in eine geschlossene Stellung geschwenkt und verschließt den Tragrahmen 4 mit dem darin befindlichen Stecker 5 nach unten.

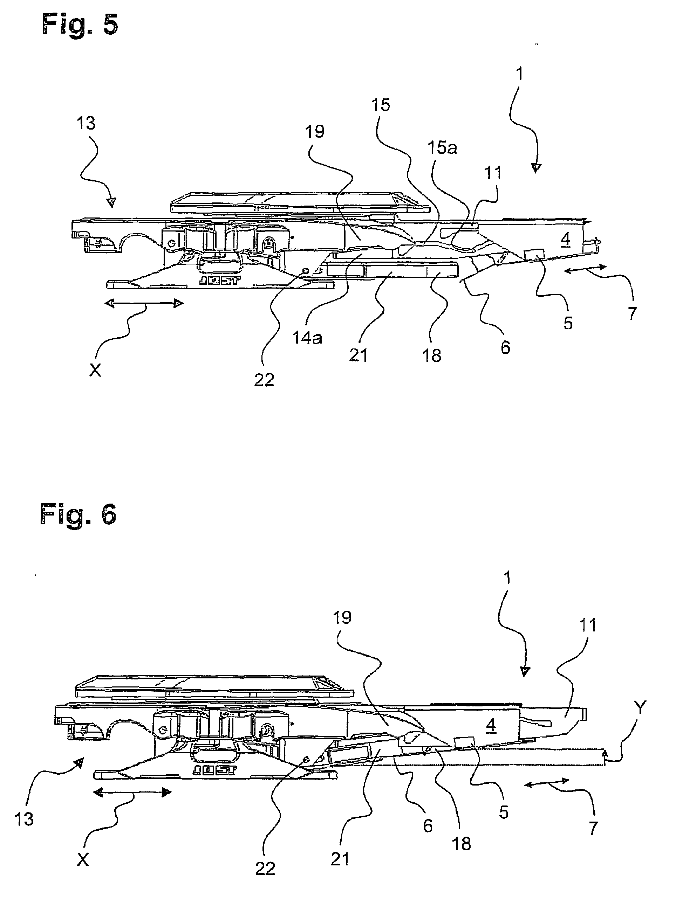

Die Figur 5 zeigt in lateraler Bewegungsrichtung X angenäherte Fahrzeuge, wobei der Königszapfen 8 bereits in die Einfahröffnung 12 der Sattelkupplung 13 eingefahren und deshalb nicht mehr sichtbar ist. Die Wandabschnitte 14a, 14b (siehe Figur 3) stoßen gegen die einander zugewandten Seiten der Kupplungshörner 19 und haben den Kulissenschieber 11 gegenüber dem Tragrahmen 4 nach hinten gedrückt. Dadurch ist der Steuernocken 15a innerhalb der ersten Kulisse 15 auf den untersten Punkt des V-förmigen Abschnittes gewandert und drückt die Führungsrampe 6 in eine maximal nach unten ausgeschwenkte Position.

Die maximal nach unten ausgeschwenkte Position der Führungsrampe 6 reicht bis unter das Niveau der Steckerdose 18, so dass die Steckerdose 18 bei einer weiteren Annäherung in lateraler Bewegungsrichtung X auf die Führungsrampe 6 trifft. Unmittelbar vor dem Auftreffen der Steckerdose 18 auf die Führungsrampe 6 ist der Königszapfen 8 bereits über das Schwenklager 22 hinweg gewandert. Diese Anordnung verhindert eine Kollision des nach oben auf der Führungsrampe 6 wandernden Steckers 5 beziehungsweise Tragarms 21 mit dem Königszapfen 8.

Einen vollständig in die Sattelkupplung 13 eingefahrenen Königszapfen 8 zeigt die Figur 6. Der Stecker 5 ist auf der Führungsrampe 6 in Richtung des Steckers 5 gewandert und hat dabei bis zur endgültigen Kontaktierung eine Aufwärtsbewegung Y vollzogen. Diese Aufwärtsbewegung Y ist besonders günstig durch das Schwenklager 22 des Tragarmes 21 möglich. Grundsätzlich könnte anstelle eines schwenkbaren Tragarmes 21 auch ein biegeelastischer Tragarm 21 zum Einsatz kommen.

Die Aufwärtsbewegung Y des Steckers 5 wird durch die nach oben schwingende Führungsrampe 6 unterstützt. Durch das vollständige Einfahren des Königszapfens 8 in die Sattelkupplung 13 längs der lateralen Bewegungsrichtung X wird der Tragrahmen 4 gegenüber dem ortsfest in der Einfahröffnung 12 gehaltenen Kulissenschieber 11 vorgezogen, so dass der Steuernocken 15a in den aufsteigenden Teil des V-förmigen Abschnitts und von dort in den horizontal verlaufenden Abschnitt der ersten Kulisse 15 wandert. Die daraus resultierende Aufwärtsbewegung der Führungsrampe 6 hebt die Steckerdose 18 an und unterstützt ein Einstechen der Steckerdose 18 in den Stecker 5.

### Bezugszeichenliste

- 1: Steckerkonsole
- 2: Lager
- 3: Kupplungsmittel
- 4: Tragrahmen
- 5: Stecker
- 6: Führungsrampe
- 7: Steckachse
- 8: Königszapfen
- 9: Unterseite Stecker
- 10: Unterseite Königszapfen
- 11: Kulissenschieber
- 12: Einfahröffnung
- 13: Sattelkupplung
- 14a,b: Wandabschnitte
- 15: erste Kulisse
- 15a: Steuernocken
- 16: zweite Kulisse
- 17: Steckerblende
- 18: Steckerdose
- 19: Kupplungshörner Sattelkupplung
- 20: hinteres Ende Sattelkupplung
- 21: Tragarm
- 22: Schwenklager
- 23: Scharniergelenk

- X: laterale Bewegungsrichtung
- Y: Aufwärtsbewegung

## Patentansprüche

1. Steckerkonsole (1) für ein Anhängerfahrzeug eines Lastzuges, umfassend einen an einem Lager (2) um ein Kupplungsmittel (3) des Anhängers schwenkbaren Tragrahmen (4) und einen an dem Tragrahmen (4) ortsfest angeordneten Stecker (5), **dadurch gekennzeichnet,**
**dass** der Stecker (5) in der Fahrzeuglängsachse gesehen stets zumindest teilweise von dem Kupplungsmittel (3) überdeckt ist, und vor dem Stecker (5) eine zumindest während des Kupplungsvorgangs auf den Stecker (5) geneigt zulaufende Führungsrampe (6) ausgebildet ist.

2. Steckerkonsole (1) nach Anspruch 1, **dadurch gekennzeichnet, dass** der Stecker (5) gegenüber der Fahrzeuglängsachse nach unten geneigt ist.

3. Steckerkonsole (1) nach Anspruch 1 oder 2, **dadurch gekennzeichnet, dass** die Führungsrampe (6) steiler als die Steckachse (7) des Steckers (5) geneigt ist.

4. Steckerkonsole (1) nach einem der Ansprüche 1 bis 3, **dadurch gekennzeichnet, dass** das Kupplungsmittel (3) ein Königszapfen (8) eines Aufliegers ist.

5. Steckerkonsole (1) nach Anspruch 4, **dadurch gekennzeichnet, dass** der Stecker (5) mit seiner Unterseite (9) oberhalb oder auf dem Niveau der Unterseite (10) des Königszapfens (8) angeordnet ist.

6. Steckerkonsole (1) nach einem der Ansprüche 1 bis 5, **dadurch gekennzeichnet, dass** an dem Tragrahmen (4) ein in der Fahrzeuglängsachse gegenüber diesem verschiebbar gelagerter Kulissenschieber (11) angreift.

7. Steckerkonsole (1) nach Anspruch 6, **dadurch gekennzeichnet, dass** der Kulissenschieber (11) zwei komplementär zur Einfahröffnung (12) einer Sattelkupplung (13) ausgerichtete Wandabschnitte (14a, 14b) aufweist.

8. Steckerkonsole (1) nach Anspruch 6 oder 7, **dadurch gekennzeichnet, dass** in dem Kulissenschieber (11) eine erste Kulisse (15) ausgeformt ist, welche mit der Führungsrampe (6) zusammenwirkt.

9. Steckerkonsole (1) nach einem der Ansprüche 6 bis 8, **dadurch gekennzeichnet, dass** in dem Kulissenschieber (11) eine zweite Kulisse (16) ausgeformt ist, welche mit einer Steckerblende (17) zusammenwirkt.

10. Steckkupplungssystem mit einer auf dem Anhängerfahrzeug angeordneten Steckerkonsole (1) nach einem der Ansprüche 1 bis 9 und einer unterhalb einer Einfahröffnung (12) einer Sattelkupplung (13) anbringbaren Steckerdose (18), wobei die Steckerdose (18) vertikal schwenkbar befestigt ist,
**dadurch gekennzeichnet, dass** der Stecker (5) in kontaktiertem Zustand mit der Steckerdose (18) in der Fahrzeuglängsachse beabstandet zu Kupplungshömem (19) der Sattelkupplung (13) angeordnet ist.

11. Steckkupplungssystem nach Anspruch 10, **dadurch gekennzeichnet, dass** die Steckerdose (18) stets über das hintere Ende (20) der Sattelkupplung (13) ragt.

12. Steckkupplungssystem nach Anspruch 10 oder 11, **dadurch gekennzeichnet, dass** die Steckerdose (18) endseitig an einem Tragarm (21) befestigt ist.

13. Steckkupplungssystem nach Anspruch 12, **dadurch gekennzeichnet, dass** der Tragarm (21) an dem der Steckerdose (18) gegenüberliegenden Ende ein Schwenklager (22) aufweist.

14. Verfahren zum Verbinden eines an einem Anhänger befindlichen Steckers (5) mit einer an einem Zugfahrzeug befindlichen Steckerdose (18), **dadurch gekennzeichnet, dass** die Steckerdose (18) durch die Relativbewegung der Fahrzeuge aus einer Ruhelage auf eine vor dem Stecker (5) angeordnete Führungsrampe (6) gedrückt, auf der Führungsrampe (6) angehoben und in einer Endstellung mit dem ortsfest in einem Tragrahmen (4) angeordneten Stecker (5) in Wirkeingriff gebracht wird.

15. Verfahren nach Anspruch 14, **dadurch gekennzeichnet, dass** durch ein Folgen des Steckers (5) entsprechend dem Verlauf der Führungsrampe (6) die Längsbewegung (X) der Fahrzeuge während des Kupplungsvorganges in eine Aufwärtsbewegung (Y) des Steckers (5) gewandelt wird.

16. Verfahren nach Anspruch 14 oder 15, **dadurch gekennzeichnet, dass** mittels des formschlüssig in die Sattelkupplung (13) einfahrbaren Tragrahmens (4) eine Längsbewegung (X) eines verschiebbar daran angreifenden Kulissenschiebers (11) in eine Schwenkbewegung der Führungsrampe (6) gewandelt wird.

## Claims

1. Plug-type console (1) for a trailer vehicle of a lorry trailer, comprising a carrier frame (4) which can be pivoted on a bearing (2) about a coupling means (3) of the trailer and a plug (5) which is fixedly arranged on the carrier frame (4), **characterised in that**
the plug (5), when viewed in the direction of the longitudinal axis of the vehicle, is always at least partially covered by the coupling means (3) and upstream of the plug (5) there is formed a guiding ramp (6) which extends in an inclined manner towards the plug (5) at least during the coupling operation.

2. Plug-type console (1) according to claim 1, **characterised in that** the plug (5) is inclined downwards relative to the longitudinal axis of the vehicle.

3. Plug-type console (1) according to claim 1 or claim 2, **characterised in that** the guiding ramp (6) is inclined more steeply than the plug axis (7) of the plug (5).

4. Plug-type console (1) according to any one of claims 1 to 3, **characterised in that** the coupling means (3) is a kingpin (8) of a trailer.

5. Plug-type console (1) according to claim 4, **characterised in that** the plug (5) is arranged with the lower side (9) thereof above or at the level of the lower side (10) of the kingpin (8).

6. Plug-type console (1) according to any one of claims 1 to 5, **characterised in that** there engages on the carrier frame (4) a slotted sliding member (11) which is arranged so as to be able to be displaced relative thereto in the longitudinal axis of the vehicle.

7. Plug-type console (1) according to claim 6, **characterised in that** the slotted sliding member (11) has two wall portions (14a, 14b) which are directed in a complementary manner relative to the introduction opening (12) of a fifth wheel (13).

8. Plug-type console (1) according to claim 6 or claim 7, **characterised in that** there is formed in the slotted sliding member (11) a first slotted member (15) which co-operates with the guiding ramp (6).

9. Plug-type console (1) according to any one of claims 6 to 8, **characterised in that** there is formed in the slotted sliding member (11) a second slotted member (16) which co-operates with a plug shield (17).

10. Plug-type coupling system having a plug-type console (1) which is arranged on the trailer vehicle according to any one of claims 1 to 9 and a plug-type socket (18) which can be fitted below an introduction opening (12) of a fifth wheel (13), the plug-type socket (18) being secured so as to be able to be pivoted vertically,
**characterised in that**
the plug (5) in a state in contact with the plug-type socket (18) is arranged in the longitudinal axis of the vehicle with spacing relative to the coupling horns (19) of the fifth wheel (13).

11. Plug-type coupling system according to claim 10, **characterised in that** the plug-type socket (18) always protrudes over the rear end (20) of the fifth wheel (13).

12. Plug-type coupling system according to claim 10 or claim 11, **characterised in that** the plug-type socket (18) is secured at the end side to a carrier arm (21).

13. Plug-type coupling system according to claim 12, **characterised in that** the carrier arm (21) has, at the end opposite the plug-type socket (18), a pivot bearing (22).

14. Method for connecting a plug (5) located on a trailer to a plug-type socket (18) located on a traction vehicle, **characterised in that** the plug-type socket (18) is pressed by the relative movement of the vehicles from an idle position onto a guiding ramp (6) which is arranged upstream of the plug (5), lifted on the guiding ramp (6) and in an end position brought into operational engagement with the plug (5) which is fixedly arranged in a carrier frame (4).

15. Method according to claim 14, **characterised in that**, by following the plug (5) in accordance with the path of the guiding ramp (6), the longitudinal movement (X) of the vehicles during the coupling operation is converted into an upward movement (Y) of the plug (5).

16. Method according to claim 14 or claim 15, **characterised in that**, by means of the carrier frame (4) which can be introduced in a positive-locking manner into the fifth wheel (13), a longitudinal movement (X) of a slotted sliding member (11) which engages in a displaceable manner thereon is converted into a pivoting movement of the guiding ramp (6).

## Revendications

1. Console (1) à système d'enfichage, destinée à une remorque de train routier, comprenant un cadre de support (4) pouvant pivoter sur un palier (2), autour d'un moyen d'accouplement (3) de ladite remorque, et une fiche (5) occupant une position fixe sur ledit cadre de support (4),
**caractérisée par le fait**
**que**, observée suivant l'axe longitudinal du véhicule, ladite fiche (5) est, au moins partiellement, recouverte en permanence par ledit moyen d'accouplement (3) ; et une rampe de guidage (6), s'étendant à l'oblique vers ladite fiche (5) au moins lors du processus d'accouplement, est ménagée avant ladite fiche (5).

2. Console (1) à système d'enfichage, selon la revendication 1, **caractérisée par le fait que** la fiche (5) est inclinée vers le bas par rapport à l'axe longitudinal du véhicule.

3. Console (1) à système d'enfichage, selon la revendication 1 ou 2, **caractérisée par le fait que** la rampe de guidage (6) présente une inclinaison à pente plus raide que celle de l'axe d'emboîtement (7) de la fiche (5).

4. Console (1) à système d'enfichage, selon l'une des revendications 1 à 3, **caractérisée par le fait que** le moyen d'accouplement (3) est un pivot central (8) d'une semi-remorque.

5. Console (1) à système d'enfichage, selon la revendication 4, **caractérisée par le fait que** la fiche (5) se situe, par sa face inférieure (9), au-dessus de la face inférieure (10) du pivot central (8) ou au niveau de ladite face.

6. Console (1) à système d'enfichage, selon l'une des revendications 1 à 5, **caractérisée par le fait qu'**un coulisseau (11), venant en prise avec le cadre de support (4), est monté à coulissement vis-à-vis dudit cadre suivant l'axe longitudinal du véhicule.

7. Console (1) à système d'enfichage, selon la revendication 6, **caractérisée par le fait que** le coulisseau (11) comporte deux zones de paroi (14a, 14b) dont l'orientation est complémentaire de celle de l'orifice d'insertion (12) d'un accouplement à sellette (13).

8. Console (1) à système d'enfichage, selon la revendication 6 ou 7, **caractérisée par le fait qu'**une première piste de coulissement (15), façonnée dans le coulisseau (11), coopère avec la rampe de guidage (6).

9. Console (1) à système d'enfichage, selon l'une des revendications 6 à 8, **caractérisée par le fait qu'**une seconde piste de guidage (16), façonnée dans le coulisseau (11), coopère avec une pièce (17) d'obturation de la fiche.

10. Système d'accouplement par emboîtement comprenant une console (1) à système d'enfichage, conforme à l'une des revendications 1 à 9, disposée sur la remorque, et une prise (18) pouvant être installée au-dessous d'un orifice d'insertion (12) d'un accouplement à sellette (13), ladite prise (18) étant fixée à pivotement vertical,
**caractérisé par le fait**
**que**, à l'état de contact établi avec la prise (18), la fiche (5) est placée, suivant l'axe longitudinal du véhicule, à distance d'oreilles d'attelage (19) dudit accouplement à sellette (13).

11. Système d'accouplement par emboîtement selon la revendication 10, **caractérisé par le fait que** la prise (18) fait saillie, en permanence, au-delà de l'extrémité postérieure (20) de l'accouplement à sellette (13).

12. Système d'accouplement par emboîtement selon la revendication 10 ou 11, **caractérisé par le fait que** la prise (18) est fixée à un bras de support (21) par une extrémité.

13. Système d'accouplement par emboîtement selon la revendication 12, **caractérisé par le fait que** le bras de support (21) offre un coussinet de pivotement (22) à l'extrémité pointant à l'opposé de la prise (18).

14. Procédé de connexion d'une fiche (5), située sur une remorque, avec une prise (18) située sur un véhicule tracteur, **caractérisé par le fait que**, suite au mouvement relatif accompli par les véhicules, ladite prise (18) quitte une position de repos et est pressée contre une rampe de guidage (6) implantée avant ladite fiche (5) ; est soulevée sur ladite rampe de guidage (6) ; et est mise en interaction opérante, dans une position extrême, avec ladite fiche (5) occupant une position stationnaire dans un cadre de support (4).

15. Procédé selon la revendication 14, **caractérisé par le fait que**, par effet de poursuite de la fiche (5) en concordance avec le tracé de la rampe de guidage (6), le mouvement longitudinal (X) des véhicules est converti, au cours du processus d'accouplement, en un mouvement ascendant (Y) de ladite fiche (5).

16. Procédé selon la revendication 14 ou 15, **caractérisé par le fait que**, sous l'action du cadre de support (4) pouvant être inséré par concordance de formes dans l'accouplement à sellette (13), un mouvement longitudinal (X) d'un coulisseau (11), venant en prise coulissante avec ledit cadre, est converti en un mouvement pivotant de la rampe de guidage (6).
